# EUROPÄISCHE PATENTSCHRIFT

(11) **EP 0 741 249 B1**
(45) Veröffentlichungstag und Bekanntmachung des Hinweises auf die Patenterteilung: **12.07.2000**
(21) Anmeldenummer: 96110078.1
(22) Anmeldetag: 20.05.1994
(51) Int. Cl.: F16B 13/02, F16B 13/00

(54) **Haltedübel**
Holding dowel
Cheville de retenue

(30) Priorität: 03.06.1993 DE 4318534
(43) Veröffentlichungstag der Anmeldung: 06.11.1996
(62) Teilanmeldung aus: 94107867.7
(73) Patentinhaber: TRW Automotive Electronics & Components GmbH & Co. KG, 78315 Radolfzell (DE)
(72) Erfinder: Kraus, Willibald, 67269 Grünstadt (DE)
(74) Vertreter: Eder, Thomas, Dr.-Ing.

(56) Entgegenhaltungen:
- EP-A- 0 544 054
- DE-A- 2 537 368
- FR-A- 2 090 519
- FR-A- 2 517 385

## Beschreibung

Die Erfindung bezieht sich auf einen Haltedübel aus Kunststoff, mit einem bolzenartigen Grundkörper und einem Abschlußflansch, nach dem Oberbegriff des Anspruchs 1.

Als Stand der Technik ist bereits ein Haltedübel bekannt (DE-OS 2 537 368), welcher so ausgebildet ist, daß zwei einander gegenüberliegende faltenartig eingezogene Bereiche entlang eines am unteren Ende abgeschlossenen Grundkörpers verlaufen. Zwischen diesen beiden eingezogenen Bereichen befinden sich Rastelemente, jeweils in Form einer Kante, welche zu dem unteren geschlossenen Ende des Grundkörpers konisch zulaufen. Infolge dieses konstruktiven Aufbaus ist die gesamte Anordnung wenig flexibel, so daß zur Montage ein bestimmter Aufwand erforderlich ist. Auch die Demontage gestaltet sich entsprechend aufwendig.

Weiterer Stand der Technik, von dem die vorliegende Erfindung ausgeht, ist ein Befestigungselement, welches insbesondere für die Befestigung von Dämmstoffplatten an einer Unterkonstruktion dient (EP 0 544 054 A1). Dieses Befestigungselement weist einen oberen glatten Abschnitt und einen unteren profilierten Abschnitt mit Längsschlitzen auf, wobei im profilierten Abschnitt parallel beabstandete, umlaufende, in axialer Richtung etwas nachgebende Rastelemente vorgesehen sind, deren Durchmesser den Durchmesser des Befestigungselements im oberen glatten Abschnitt übersteigt. Darüber hinaus sind im profilierten Abschnitt des Befestigungselements in axialer Richtung verlaufende, die Rastelemente abstützende Längsstege vorgesehen.

Diese bekannte Konstruktion ist speziell darauf abgestellt, Dämmstoffplatten oder ähnliche Teile an einer Unterkonstruktion zu befestigen, d. h. es ist ein ganz bestimmtes Anwendungsgebiet vorgesehen.

Der Erfindung liegt demgegenüber die Aufgabe zugrunde, einen Haltedübel der eingangs genannten Art zu schaffen, welcher bei einfachem Aufbau leicht und mit geringem Kraftaufwand zu montieren ist, andererseits jedoch nach der Montage einen sicheren Sitz in einer Öffnung eines Trägers gewährleistet.

Diese Aufgabe wird erfindungsgemäß mit den Merkmalen im kennzeichnenden Teil des Anspruchs 1 gelöst.

Hierdurch ergibt sich der Vorteil eines sehr elastisch gestalteten Grundkörpers, welcher ohne Schwierigkeiten in eine Öffnung eines Trägers eingesetzt werden kann und dort funktionssicher haltert.

Vorteilhafte Weiterbildungen ergeben sich aus den Unteransprüchen.

Die Erfindung wird nachfolgend anhand eines in der Zeichnung dargestellter Ausführungsbeispieles näher beschrieben.

In der Zeichnung zeigen:
- Fig. 1: eine Ausführungsform der Erfindung in Seitenansicht;
- Fig. 2: eine Draufsicht auf die Ausführungsform nach Fig. 1;
- Fig. 3 und 4: perspektivische Ansichten der Ausführungsform nach Fig. 1.

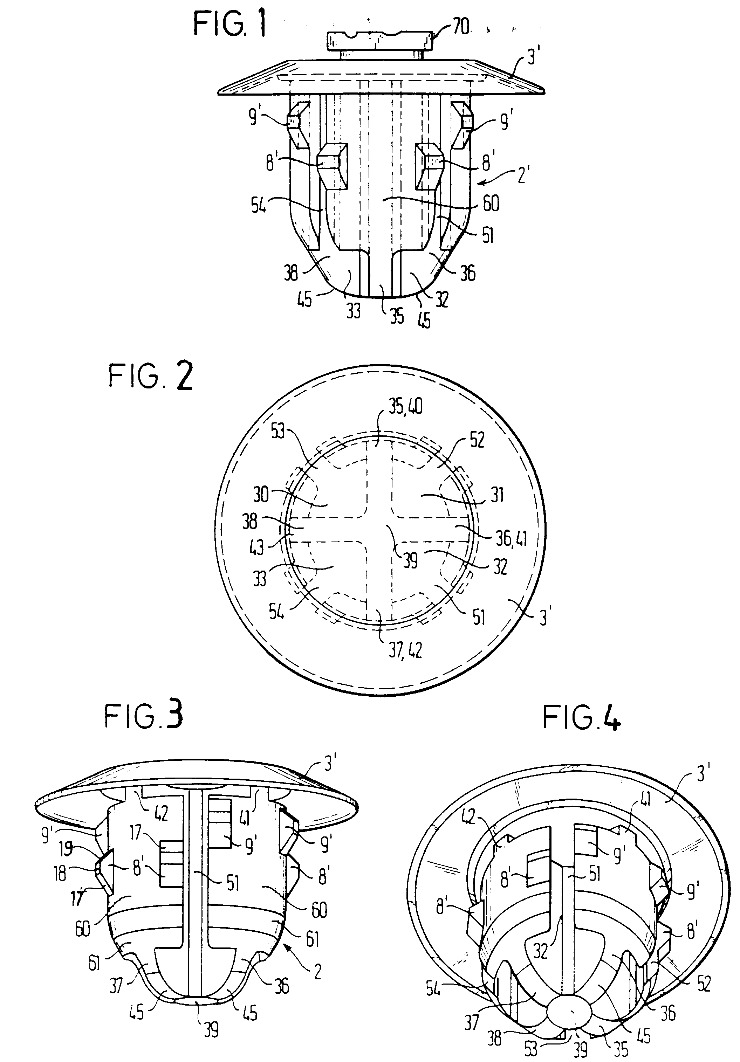

Der in den Fig. 1 - 4 dargestellte Haltedübel 1, welcher aus Kunststoff besteht, weist einen bolzenartigen Grundkörper 2' und einen Abschlußflansch 3' auf.

Der Grundkörper 2' weist Segmente 60 auf, die über Stege mit einem radial innenliegenden Zentralstück 39 und mit dem Abschlußflansch 3' verbunden sind.

Auf den Segmenten sind Rastelemente 8', 9' angeordnet.

Zwischen den Segmenten 60 sind über den Umfang verteilte, offene, sich axial erstreckende Ausnehmungen 30, 31, 32, 33 angeordnet, welche durch Wände 35, 36, 37, 38 voneinander getrennt sind. Diese Wände 35 bis 38 sind im mittleren Bereich durch das Zentralstück 39 miteinander verbunden.

Die Rastelemente 8' und 9' weisen nach Fig. 3 stegartige Form auf mit einer Anlauframpe 17, einem mittleren Bereich 18, welcher im wesentlichen parallel zum Grundkörper 2' verläuft und mit einer der Unterseite des Abschlußflansches 3' zugekehrten Rastrampe 19. Der Grundkörper 2' ist über Stege 40, 41, 42, 43 mit dem Abschlußflansch 3' verbunden. Hierdurch ergibt sich eine gute Elastizität des Grundkörpers 2', welcher das Einsetzen in eine nicht näher dargestellte Trägeröffnung erleichtert.

Bei der in Fig. 1 bis 4 dargestellten Ausführungsform sind die auf dem Umfang des Grundkörpers angeordneten Rastelemente 8', 9' höhenmäßig versetzt. Hierbei sind jeweils zwei höhenmäßig versetzte Rastelemente 8', 9' beidseitig eines mit den offenen Ausnehmungen 30, 31, 32, 33 verbundenen Schlitzes 51, 52, 53, 54 angeordnet. Durch diesen höhenmäßigen Versatz der Rastelemente 8', 9' besteht die Möglichkeit der Anordnung des erfindungsgemäßen Haltedübels in Trägeröffnungen, welche unterschiedliche Dicke aufweisen. Außerdem ist ein guter Toleranzausgleich gewährleistet.

In nicht näher dargestellter Ausführungsform besteht auch die Möglichkeit, statt der beiden höhenmäßig versetzten Rastelemente 8' und 9' weitere Rastelemente an den vier Segmenten 60 des Grundkörpers 2' vorzusehen, wobei diese Segmente 60 jeweils wieder durch die Schlitze 51, 52, 53, 54 voneinander getrennt sind.

In weiterer, nicht näher dargestellter Ausführungsform können die einzelnen Rastelemente auch eine gewindeähnliche Steigung aufweisen, um hierdurch eine verbesserte Anpassungsmöglichkeit an verschiedene Trägerstärken zu gewährleisten. Statt der in den Figuren 1 bis 4 dargestellten Anordnung der Rastelemente 8' und 9' besteht außerdem die nicht näher dargestellte Möglichkeit, alle Rastelemente auf einer Höhe anzuordnen, wobei diese Ausführungsform dann lediglich für eine Trägerstärke einsetzbar ist.

Insbesondere aus Fig. 1 und 3 geht hervor, daß das Zentralstück 39 und die Wände 35, 36, 37, 38 stirnseitig den Grundkörper 2' überragen, wobei die Wände jeweils mit zu dem Zentralstück 39 führenden Einführbereichen 45 versehen sind. Diese entweder konisch oder gewölbt ausgebildeten Einführbereiche 45 führen mit einem Konusbereich 61 zu einer guten Zentrierung bei der Montage des erfindungsgemäßen Haltedübels, wobei jedoch das Zentralstück 39 dem gesamten Grundkörper eine hohe Stabilität verleiht.

Der Abschlußflansch 3' ist mit einer umlaufenden, an sich bekannten Dichtlippe versehen. Oberseitig des Abschlußflansches kann ein an sich bekanntes Halteelement, beispielsweise ein Leitungshalter 70 angeordnet sein.

Durch die besondere Gestaltung des erfindungsgemäßen Haltedübels ergibt sich eine Vereinfachung und Erleichterung der Montage bei sicherer Befestigung innerhalb mindestens einer Trägeröffnung zwischen der Unterseite des Abschlußflansches 3 bzw. 3' und der schrägverlaufenden Rastrampe 19 der jeweiligen Rastelemente 8' und 9'. Das Einsetzen in die jeweilige Trägeröffnung wird durch die konische Form des offenen Endes des Grundkörpers 2' gewährleistet. Damit läßt sich der erfindungsgemäße Haltedübel leicht in eine Öffnung eines Trägers bzw. in mindestens zwei, konzentrisch übereinanderliegende Öffnungen von Träger einsetzen und dort funktionssicher haltern.

## Patentansprüche

1. Haltedübel aus Kunststoff, mit einem bolzenartigen Grundkörper (2') und einem Abschlußflansch (3'), wobei der Grundkörper (2') Segmente (60) aufweist, welche über Stege sowohl mit einem radial innenliegenden Zentralstück (39) als auch mit dem Abschlußflansch (3') verbunden und auf dem Umfang des Grundkörpers (2') dem Abschlußflansch (3') gegenüberliegende Rastelemente (8', 9') angeordnet sind und
wobei zwischen den Segmenten (60) mindestens drei über den Umfang des Grundkörpers (2') verteilte, offene sich axial erstreckende und durch Wände (35, 36, 37, 38) voneinander getrennte Ausnehmungen (30, 31, 32, 33) vorhanden sind,
**dadurch gekennzeichnet,**
daß die Wände (35 bis 38) im mittleren Bereich durch das Zentralstück (39) verbunden sind,
daß die Rastelemente (8', 9') stegartige Form aufweisen, mit einer Anlauframpe (17), einen mittleren Bereich (18), welcher im Wesentlichen parallel zum Grundkörper (2') verläuft und einer der Unterseite des Abschlußflansches (3') zugekehrten Rastrampe (19).

2. Haltedübel nach Anspruch 1,
**dadurch gekennzeichnet,**
daß der Grundkörper (2') vier durch Wände (35 bis 38) voneinander getrennte Ausnehmungen (30 bis 33) aufweist.

3. Haltedübel nach Anspruch 1 und 2,
**dadurch gekennzeichnet,**
daß das Zentralstück (39) und die Wände (35 bis 38) an der dem Abschlussflansch abgewandten Seite des Grundkörpers (2') diesen überragen, wobei die Wände (35 bis 38) jeweils mit zu dem Zentralstück (39) führenden Einführbereichen (45) versehen sind.

4. Haltedübel nach Anspruch 1 bis 3,
**dadurch gekennzeichnet,**
daß die Rastelemente (8', 9') höhenmäßig versetzt auf dem Umfang des Grundkörpers (2') angeordnet sind.

5. Haltedübel nach Anspruch 4,
**dadurch gekennzeichnet,**
daß jeweils zwei höhenmäßig versetzte Rastelemente (8', 9') beidseitig eines mit den offenen Ausnehmungen (30, 31, 32, 33) verbundenen Schlitzes (51, 52, 53, 54) angeordnet sind.

6. Haltedübel nach Anspruch 5,
**dadurch gekennzeichnet,**
daß auf einem Segment (60) die Rastelemente (8', 8'; 9', 9') jeweils in einer Höhe angeordnet sind.

7. Haltedübel nach Anspruch 1 und 6,
**dadurch gekennzeichnet,**
daß jedes Segment (60) durch einen Steg (40, 41, 42, 43) mit der Unterseite des Abschlußflansches (3') verbunden ist.

## Claims

1. Retaining dowel made of plastic, having a bolt-like basic body (2') and a termination flange (3'), it being the case that the basic body (2') has segments (60) which are connected, via webs, both to a radially inner central element (39) and to the termination flange (3'), and arranged on the circumference of the basic body (2') are latching elements (8', 9') which are located opposite the termination flange (3'), and it being the case that provided between the segments (60) are at least three open, axially extending recesses (30, 31, 32, 33) which are distributed over the circumference of the basic body (2') and are separated from one another by walls (35, 36, 37, 38), characterized in that the walls (35 to 38) are connected in the central region by the central element (39), and in that the latching elements (8', 9') are of a web-like form with a run-on ramp (17), a central region (18), which runs essentially parallel to the basic body (2'), and a latching ramp (19), which is directed towards the underside of the termination flange (3').

2. Retaining dowel according to Claim 1, characterized in that the basic body (2') has four recesses (30 to 33) which are separated from one another by walls (35 to 38).

3. Retaining dowel according to Claims 1 and 2, characterized in that, on that side of the basic body (2') which is directed away from the termination flange, the central element (39) and the walls (35 to 38) project beyond said basic body, the walls (35 to 38) each being provided with introduction regions (45) leading to the central element (39).

4. Retaining dowel according to Claims 1 to 3, characterized in that the latching elements (8', 9') are offset vertically on the circumference of the basic body (2').

5. Retaining dowel according to Claim 4, characterized in that in each case two vertically offset latching elements (8', 9') are arranged on both sides of a slit (51, 52, 53, 54) connected to the open recesses (30, 31, 32, 33).

6. Retaining dowel according to Claim 5, characterized in that the latching elements (8', 8'; 9' 9') are each arranged on one vertical level on a segment (60).

7. Retaining dowel according to Claims 1 and 6, characterized in that each segment (60) is connected to the underside of the termination flange (3') by a web (40, 41, 42, 43).

## Revendications

1. Cheville de retenue en matière synthétique avec un corps de base (2') en forme de boulon et une collerette de fermeture (3'), le corps de base (2') présentant des segments (60) qui sont raccordés par des barrettes aussi bien avec un élément central (39) situé radialement à l'intérieur qu'avec la collerette de fermeture (3') et sur la périphérie du corps de base (2') en regard de la bride de fermeture (3') sont disposés des éléments d'encliquetage (8', 9')
et
entre les segments (60) il est prévu au moins trois évidements (30, 31, 32, 33) répartis sur la périphérie du corps de base (2'), évidements qui sont ouverts et s'étendent axialement et sont séparés par les parois (35, 36, 37, 38),
**caractérisée en ce que**
dans la partie médiane, les parois (35 à 38) sont raccordées par l'élément central (39),
en ce que les éléments d' encliquetage (8', 9') présentent une forme de barrette, avec une rampe d'accostage (17), une région médiane (18) qui s'étend sensiblement parallèlement au corps de base (2') et une rampe d'encliquetage (19) dirigée vers le côté inférieur de la collerette de fermeture (3').

2. Cheville de retenue selon la revendication 1,
**caractérisée en ce que,**
le corps de base (2') présente quatre évidements (30 à 33) séparés entre eux par les parois (35 à 38).

3. Cheville de retenue selon la revendication 1 et 2,
**caractérisée en ce que**
l'élément central (39) et les parois (35 à 38) sur le côté du corps de base (2') détourné de la collerette de fermeture, se trouvent en surplomb par rapport au corps de base (2') , les parois (35 à 38) étant respectivement munies de zones d'introduction (45) qui mènent dans l'élément central (39).

4. Cheville de retenue selon la revendication 1 à 3,
**caractérisée en ce que**
les éléments d'encliquetage (8', 9') sont disposés de façon décalée en hauteur sur la périphérie du corps de base (2').

5. Cheville de retenue selon la revendication 4,
**caractérisée en ce que**
deux éléments d'encliquetage (8', 9') décalés en hauteur sont respectivement disposés des deux côtés d'une fente (51, 52, 53, 54) raccordée aux évidements ouverts (30, 31, 32, 33).

6. Cheville de retenue selon la revendication 5,
**caractérisée en ce que**
les éléments d'encliquetage (8', 8';9', 9') sont respectivement disposés sur un segment (60) à une certaine hauteur.

7. Cheville de retenue selon la revendication 1 et 6,
**caractérisée en ce que**
chaque segment (60) est raccordé par l'intermédiaire d'une barrette (40, 41, 42, 43) avec le côté inférieur de la collerette de fermeture (3').
